# EUROPÄISCHE PATENTSCHRIFT

(11) **EP 2 686 619 B1**
(45) Veröffentlichungstag und Bekanntmachung des Hinweises auf die Patenterteilung: **17.02.2021**
(21) Anmeldenummer: 12709874.7
(22) Anmeldetag: 16.03.2012
(51) Int. Cl.: C04B 35/195, C04B 35/478, C04B 38/00, F24S 20/20, F24S 70/16, F24S 80/60

(54) **SOLARABSORBERMODUL**
SOLAR ABSORBER MODULE
MODULE ABSORBEUR SOLAIRE

(30) Priorität: 18.03.2011 DE 102011005817
(43) Veröffentlichungstag der Anmeldung: 22.01.2014
(73) Patentinhaber: Saint-Gobain IndustrieKeramik Rödental GmbH, 96466 Rödental (DE)
(72) Erfinder: HACK, Udo, 91336 Heroldsbach (DE)
(74) Vertreter: Lendvai, Tomas
(86) Internationale Anmeldenummer: PCT/EP2012/054658
(87) Internationale Veröffentlichungsnummer: WO 2012/126826

(56) Entgegenhaltungen:
- WO-A1-03/021161
- WO-A2-2010/086443
- WO-A2-2011/018331
- DE-A1- 10 257 458
- DE-A1- 19 744 541

## Beschreibung

Die Erfindung betrifft einen Absorberkelch, ein Solarabsorbermodul und ein Verfahren zur Herstellung eines Solarabsorbermoduls.

Keramische Bauelemente, wie Solarabsorbermodule, zeichnen sich durch eine besonders hohe Beständigkeit gegenüber hohen thermischen Gradienten aus. Das gilt über den räumlichen Verlauf der Solarabsorbermodule als auch bei einem schnellen Wechsel der Temperatur, einer sogenannten Thermoschockbelastung.

Besonders wichtig ist diese Eigenschaft bei der Verwendung von keramischen Bauelementen als Bestandteile von Solarabsorbermodulen für den Betrieb solarthermischer Turmkraftwerke. Dabei wird Sonnenlicht mittels automatisch positionierender Spiegel auf einen zentralen Hochtemperaturwärmetauscher, einen sogenannten Solarreceiver, gelenkt, in dem eine Vielzahl von Solarabsorbermodulen das konzentrierte Sonnenlicht in Wärme umwandeln. Die Oberfläche des Solarabsorbermoduls kann auf Temperaturen von bis zu 1380°C aufgeheizt werden, wobei technisch sinnvoll handhabbare Temperaturen um die 1200°C liegen. Das Innere des Hochtemperaturwärmetauschers wird mit einem Wärmeträgermedium, wie Luft, Gas oder Wasserdampf, durchströmt. Bei Luft und Gas wird in einem zweiten Wärmetauscher Wasserdampf erzeugt, der zum Antrieb einer konventionellen Turbine und folglich zur Erzeugung elektrischer Energie dient.

Aus DE 100 07 648 C1 und WO 2010/086443 A2 sind Bauelemente und Solarabsorbermodule aus Trichtern und Wabenkörpern aus keramischen Werkstoffen wie Siliciumcarbid und siliciuminfiltriertem Siliziumcarbid bekannt.

Die Solarabsorbermodule sind im Betrieb in solarthermischen Kraftwerken starken und schnellen Temperaturwechseln ausgesetzt. Diese Temperaturwechsel betragen in der Regel bis zu 200 °C/min und treten zum Beispiel durch Abschattung der Sonneneinstrahlung beim Durchzug von Wolkenfeldern auf. Für solche Solarabsorbermodule wird eine Nutzungsdauer von mindestens 20 Jahren angestrebt.

Keramische Werkstoffe aus Siliciumcarbid oder siliciuminfiltriertem Siliciumcarbid weisen entsprechende Materialeigenschaften bezüglich thermischer Beständigkeit auf. Jedoch treten bei Solarabsorbermodulen aus Siliciumcarbid oder siliciuminfiltriertem Siliciumcarbid große Wärmeverluste und damit niedrige thermische Wirkungsgrade auf.

Die Aufgabe der vorliegenden Erfindung liegt darin, einen Absorberkelch und ein Solarabsorbermodul mit niedrigen Wärmeverlusten und verbessertem thermischen Wirkungsgrad bei ausreichender Festigkeit bereitzustellen.

Die Aufgabe der vorliegenden Erfindung wird erfindungsgemäß durch ein Solarabsorbermodul gemäß Anspruch 1 gelöst. Bevorzugte Ausführungen gehen aus den Unteransprüchen hervor.

Des Weiteren umfasst die Erfindung ein Verfahren zur Herstellung eines Solarabsorbermoduls.

Eine Verwendung des erfindungsgemäßen Verfahrens geht aus weiteren Ansprüchen hervor.

Das erfindungsgemäße Solarabsorbermodul umfasst eine Absorberwabe aus beispielsweise Siliciumcarbid oder siliciuminfiltriertem Siliciumcarbid und einen Absorberkelch, der einen keramischen Werkstoff mit einer Wärmeleitfähigkeit von ≤ 3 W/(m K) enthält.

In einer vorteilhaften Ausgestaltung des erfindungsgemäßen Solarabsorbermoduls enthält die Absorberwabe einen keramischen Werkstoff mit einer Wärmeleitfähigkeit von ≤ 2,5 W/(m K), besonders bevorzugt von ≤ 2 W/(mK).

In einer vorteilhaften Ausgestaltung des erfindungsgemäßen Solarabsorbermoduls enthält der Absorberkelch Cordierit und/oder Aluminiumtitanat.

Die Absorberwabe enthält Kanäle, die die Lufteintrittsseite der Absorberwabe mit der Luftaustrittsseite der Absorberwabe verbinden. Der Absorberkelch umfasst einen vierkantförmigen Abschnitt, der zur Aufnahme der Absorberwabe dient, einen trichterförmigen Abschnitt, der die angesaugte Luft bündelt und einen reduzierten Abschnitt, der die angesaugte Luft an ein Rohrsystem weiterleitet.

Beim erfindungsgemäßen Solarabsorbermodul enthält der Absorberkelch gegossenes Cordierit oder gegossenes Aluminiumtitanat. Außerdem ist an der Außenseite des vierkantförmigen Abschnitts des Absorberkelchs mindestens ein Abstandshalter pro Seite angeordnet. Der Abstandshalter hat einem Abstand d zur Vorderkante des Absorberkelches von 15 % bis 80 % der Länge c des vierkantförmigen Abschnitts.

In einer bevorzugten Ausgestaltung des erfindungsgemäßen Solarabsorbermoduls weist der vierkantförmige Abschnitt des Absorberkelchs an seiner Außenseite zwei Abstandhalter pro Seite auf. Seite bedeutet hier jede der vier außenliegenden Seiten des vierkantförmigen Abschnitts.

In einer bevorzugten Ausgestaltung des erfindungsgemäßen Solarabsorbermoduls weist der Abstandshalter einen Abstand d zur Vorderkante des Absorberkelchs (3) von 25 % bis 40 % der Länge c des vierkantförmigen Abschnitts auf.

Der erfindungsgemäße Cordierit-Werkstoff enthält vorzugsweise von 30 Gew.-% bis 60 Gew.-% Aluminiumoxid (Al₂O₃), von 30 Gew.-% bis 60 Gew.-% Siliziumoxid (SiO₂) und von 1 Gew.-% bis 10 Gew.% Magnesiumoxid (MgO) und von 0 Gew. % bis 5 Gew.-% Titanoxid (TiO₂), von 0 Gew. % bis 5 Gew.-% Zirconiumoxid (ZrO₂) und/oder von 0 Gew. % bis 5 Gew.-% Zirconiumsilicat (ZrSiO₄).

In einer bevorzugten Ausgestaltung der Erfindung enthält der Cordierit-Werkstoff von 50 Gew.-% bis 65 Gew.-% Aluminiumoxid (Al₂O₃), von 30 Gew.-% bis 40 Gew.-% Siliziumoxid (SiO₂) und von 3 Gew.-% bis 10 Gew.% Magnesiumoxid (MgO). Die Zusammensetzung kann noch weitere Beimengungen und herstellungsbedingte Verunreinigungen enthalten, beispielsweise von 0 Gew. % bis 5 Gew.-% Titanoxid (TiO₂), Zirconiumoxid (ZrO₂) und/oder Zirconiumsilicat (ZrSiO₄).

In einer besonders bevorzugten Ausgestaltung der Erfindung enthält der Cordierit-Werkstoff von 52 Gew.-% bis 62 Gew.-% Aluminiumoxid (Al₂O₃), von 30 Gew.-% bis 40 Gew.-% Siliziumoxid (SiO₂) und von 5 Gew.-% bis 7 Gew.% Magnesiumoxid (MgO). Die Zusammensetzung kann noch weitere Beimengungen und herstellungsbedingte Verunreinigungen enthalten, beispielsweise von 0 Gew. % bis 5 Gew.-% Titanoxid (TiO₂), Zirconiumoxid (ZrO₂) und/oder Zirconiumsilicat (ZrSiO₄).

In einer alternativen Ausgestaltung der Erfindung enthält der Cordierit-Werkstoff von 30 Gew.-% bis 40 Gew.-% Aluminiumoxid (Al₂O₃), von 50 Gew.-% bis 65 Gew.-% Siliziumoxid (SiO₂) und von 3 Gew.-% bis 10 Gew.% Magnesiumoxid (MgO). Die Zusammensetzung kann noch weitere Beimengungen und herstellungsbedingte Verunreinigungen enthalten, beispielsweise von 0 Gew. % bis 5 Gew.-% Titanoxid (TiO₂), Zirconiumoxid (ZrO₂) und/oder Zirconiumsilicat (ZrSiO₄).

In einer bevorzugten Ausgestaltung der Erfindung enthält der Cordierit-Werkstoff von 35 Gew.-% bis 40 Gew.-% Aluminiumoxid (Al₂O₃), von 30 Gew.-% bis 40 Gew.-% Siliziumoxid (SiO₂) und von 5 Gew.-% bis 7 Gew.% Magnesiumoxid (MgO). Die Zusammensetzung kann noch weitere Beimengungen und herstellungsbedingte Verunreinigungen enthalten, beispielsweise von 0 Gew. % bis 5 Gew.-% Titanoxid (TiO₂), Zirconiumoxid (ZrO₂) und/oder Zirconiumsilicat (ZrSiO₄).

In einer bevorzugten Ausgestaltung der Erfindung enthält der Cordierit-Werkstoff von 1 Gew.-% bis 30 Gew.-%, bevorzugt von 20 Gew.-% bis 30 Gew.-% Siliziumcarbid.

Solarabsorbermodule werden durch konzentrierte Sonnenstrahlung frontseitig bis auf 1200 °C aufgeheizt. Dabei wird Luft durch die Absorberwabe gesaugt. Die in der Mitte des Receiverfeldes bis auf 1000 °C erhitzte, angesaugte Luft wird im Absorberkelch gesammelt und in das Innere eines doppelwandigen Anschlussrohrs in einer rückwärtigen Stahlkonstruktion weitergeleitet. Nach dem Entzug der Wärmeenergie in einem zweiten Wärmetauscher wird die auf etwa 120 °C abgekühlte Rückkehrluft im Rückluftkanal des doppelwandigen Rohrs zurückgeführt und gleichzeitig die Stahlkonstruktion gekühlt.

Die auf 120 °C abgekühlte Rückkehrluft passiert die Außenseite des trichterförmigen Abschnitts des Absorberkelchs und wird dabei auf etwa 180 °C aufgeheizt. Gleichzeitig wird die auf etwas 1000 °C erhitzte Luft im Inneren des trichterförmigen Abschnitts des Absorberkelches durch Kontakt mit der von außen gekühlten Wand des Absorberkelches abgekühlt.

Der reduzierte Abschnitt des Absorberkelches und das Innenrohr des doppelwandigen Rohrs werden üblicherweise thermisch isoliert, beispielsweise durch ein Material, welches Aluminiumsilikatfasern enthält. Im Bereich des vierkantförmigen Abschnitts und des trichterförmigen Abschnitts des Absorberkelches ist wegen der Krümmung der Bauelemente eine solche Isolierung technisch nur sehr aufwendig und kostenintensiv realisierbar.

Nach dem Stand der Technik bestehen Absorberwabe und Absorberkelche üblicherweise aus siliciuminfiltrierten Siliciumcarbid-Werkstoffen. Siliciuminfiltrierte Siliciumcarbid-Werkstoffe sind wegen ihrer hohen Biegefestigkeit gut für hochtemperaturbeständige Bauelemente geeignet, bei denen oftmals große mechanische Spannungen aufgrund hoher Temperaturunterschiede auftreten.

Allerdings weisen siliciuminfiltrierte Siliciumcarbid-Werkstoffe eine große Wärmeleitfähigkeit auf, so dass große Wärmeverluste zwischen der etwa 1000 °C heißen angesaugten Luft und der auf etwa 120 °C abgekühlten Rückkehrluft auftreten.

Der vorliegenden Erfindung liegt der Gedanke zugrunde, den Absorberkelche und insbesondere den vierkantförmigen Abschnitt und den trichterförmigen Abschnitt aus einem Material mit niedriger Wärmeleitfähigkeit herzustellen. Dies reduziert die Wärmeverluste und das Abkühlen der 1000 °C heißen Luft durch Kontakt mit den Wänden des Absorberkelches.

Der besondere Vorteil von Keramiken, die Cordierit oder Aluminiumtitanat enthalten, liegt in deren niedrigeren Wärmeleitfähigkeit im Vergleich zu siliciuminfiltrierten Siliciumcarbid-Werkstoffen. Die niedrigere Wärmeleitfähigkeit von Cordierit-Werkstoffen und Aluminiumtitanat-Werkstoffen führt zu geringeren Wärmeverlusten, insbesondere im Bereich des trichterförmigen Abschnitts des Absorberkelches. Aus den geringeren Wärmeverlusten resultiert ein höherer thermischer Wirkungsgrad des solarthermischen Kraftwerks.

Die Verwendung von Cordierit- oder Aluminiumtitanat-Werkstoffen ist für den Fachmann jedoch nicht naheliegend, da Cordierit- und Aluminiumtitanat-Werkstoffe eine geringere Biegefestigkeit als Siliciumcarbid aufweisen. Das würde den Fachmann davon abhalten, Cordierit- oder Aluminiumtitanat-Werkstoffe in Erwägung zu ziehen.

Es hat sich für den Fachmann überraschenderweise herausgestellt, dass Solarabsorbermodule aus Cordierit- oder Aluminiumtitanat-Werkstoffen den Einsatzbedingungen in solarthermischen Kraftwerken standhalten. Cordierit- oder Aluminiumtitanat-Werkstoffe weisen eine geringere Wärmeausdehnung als siliciuminfiltriertes Siliciumcarbid auf. Die geringere Wärmeausdehnung von Cordierit- oder Aluminiumtitanat-Werkstoffen kompensiert teilweise seine geringere Biegefestigkeit im Vergleich zu siliciuminfiltrierten Siliciumcarbid. Außerdem weisen Cordierit- oder Aluminiumtitanat-Werkstoffe eine exzellente Temperaturschockbeständigkeit auf.

Das erfindungsgemäße Solarabsorbermodul enthält einen Absorberkelch aus gegossenem Cordierit oder Aluminiumtitanat. Untersuchungen ergaben, dass Keramiken aus gegossenem Cordierit oder Aluminiumtitanat niedrigere Wärmeleitfähigkeitswerte und höhere Biegefestigkeitswerte aufweisen als nach dem Stand der Technik grepresste Cordierit- oder Aluminiumtitanat-Keramiken. Dies ist auf den feineren Körnungsaufbau des keramischen Schlickers beim Gießen im Vergleich zum gepressten Werkstoff zurückzuführen.

Das erfindungsgemäße Solarabsorbermodul weist bevorzugt einen Absorberkelch mit einem reduzierten Abschnitt zur Weiterleitung von durch die Absorberwabe geleiteter Luft auf. Der erfindungsgemäße Absorberkelch besteht bevorzugt aus einem quadratischen, trichterförmigen Abschnitt der in einen kreisrunden, reduzierten Abschnitt mündet.

Bei dem erfindungsgemäßen Solarabsorbermodul ist die Längsachse (L) des Absorberkelches vorzugsweise parallel zur Oberflächennormalenrichtung der Absorberwabe. Dies ist besonders vorteilhaft, da die eingesaugte Luft gleichmäßig in den Absorberkelche einströmen kann und keine ungleichmäßigen Temperaturspitzen im Randbereich des Absorberkelches auftreten.

Der erfindungsgemäße Absorberkelch und die erfindungsgemäße Absorberwabe enthalten bevorzugt Öffnungen. Die Öffnungen der Absorberwabe liegen in Einbaulage den Öffnungen des Absorberkelches gegenüber. Die Absorberwabe kann durch Einbringen eines keramischen Stifts in die Öffnung mit dem Absorberkelch lose verbunden werden, um die unterschiedliche thermische Dehnung zwischen Absorberwabe und Absorberkelch zu kompensieren. Der keramische Stift ragt vorzugsweise nicht über den Rand des Absorberkelches hinaus und kann während der Montage der Absorbermodule beispielsweise durch ein Klebeband gesichert werden. Nach Einbau in eine Tragekonstruktion wird der keramische Stift beispielsweise durch angrenzende Solarabsorbermodule oder Begrenzungen der Tragekonstruktion in der Öffnung fixiert.

Ein weiterer Aspekt der Erfindung umfasst eine Solarabsorberanordnung mit einer Tragkonstruktion und mindestens einem erfindungsgemäßen Solarabsorbermodul. Die Tragkonstruktion weist mehrere doppelwandige Rohrstutzen mit Rückluftkanälen auf. Der Rückluftkanal wird durch den Zwischenraum zwischen dem Innenrohr und dem Außenrohr des doppelwandigen Rohrs gebildet. Jedes Innenrohr dient zur Aufnahme des reduzierten Abschnitts eines Absorberkelchs.

Die Aufgabe der Erfindung wird weiter durch ein Verfahren zur Herstellung eines Absorberkelches aus einem keramischen Werkstoff gelöst, der gegossenes Cordierit oder gegossenes Aluminiumtitanat enthält, wobei mindestens:
a) eine hohle Form mit der äußeren Form eines Absorberkelches erstellt wird,
b) die hohle Form mit einem keramischen Schlicker gefüllt wird,
c) dem keramischen Schlicker Wasser entzogen wird und ein keramischer Körper erhalten wird,
d) der keramische Körper aus der hohlen Form entfernt wird und
e) der keramische Körper bei einer Temperatur von 1300 °C bis 1450 °C gebrannt wird,
wobei der vierkantförmige Abschnitt an seiner Außenseite mindestens einen Abstandshalter pro Seite mit einem Abstand d zur Vorderkante des Absorberkelches von 15 % bis 80 % der Länge c des vierkantförmigen Abschnitts aufweist.

Die hohle Form besteht beispielsweise aus Gips oder einen anderen hygroskopischen Material, dass dem keramischen Schlicker Feuchtigkeit entziehen kann.

In einer bevorzugten Ausführungsform des erfindungsgemäßen Verfahrens weist der vierkantförmige Abschnitt des Absorberkelchs an seiner Außenseite zwei Abstandhalter pro Seite auf. Seite bedeutet hier jede der vier außenliegenden Seiten des vierkantförmigen Abschnitts.

In einer bevorzugten Ausführungsform des erfindungsgemäßen Verfahrens weist der Abstandshalter einen Abstand d zur Vorderkante des Absorberkelchs von 25 % bis 40 % der Länge c des vierkantförmigen Abschnitts auf.

Wie Versuche der Erfinder überraschenderweise zeigten, ist der Abstand d der Abstandshalter zur Vorderkante des Absorberkelches von entscheidender Bedeutung für das erfindungsgemäße Verfahren: Keramische Körper von Absorberkelchen, bei denen die Abstandshalter bis zur Vorderkante der Absorberkelche ausgestaltet waren, zeigten nach der Entnahme aus der hohlen Form Verformungen und Einknicken der Wände des vierkantförmigen Abschnitts. Diese Verformungen mussten durch Fräsen oder Schleifen nachgearbeitet werden, um ein Einsetzen der Absorberwabe zu ermöglichen. Gleichfalls zeigten die keramischen Körper von Absorberkelchen, die keine Abstandshalter aufwiesen, nach der Entnahme aus der hohlen Form, Verformungen und Einknicken der Wände des vierkantförmigen Abschnitts.

Bei erfindungsgemäß angeordneten Abstandshaltern, die einen gewissen Abstand d zur Vorderkante des Absorberkelches aufwiesen, fanden keine merkbaren Verformungen der Wände des vierkantförmigen Bereichs statt. Als gut geeignet hat sich ein Abstand d zur Vorderkante des Absorberkelches herausgestellt, der von 15 % bis 80 % der Länge c des vierkantförmigen Abschnitts beträgt.

In einer weiteren Ausführungsform des erfindungsgemäßen Verfahrens werden nach dem Entfernen der hohlen Form in Schritt (d) Öffnungen in die Absorberwabe und/oder den Absorberkelch eingebracht. Die Öffnungen werden bevorzugt mittels Bohren, Stanzen oder Wasserstrahlschneiden in den ungebrannten keramischen Körper eingebracht.

In einer bevorzugten Ausgestaltung der Erfindung enthält der keramische Schlicker zur Herstellung des Absorberkelches ein Aluminiumtitanatpulver, bei dem 80 Gew.-% der Pulverkörner eine Korngröße von etwa 30 µm und 20 Gew.-% eine Korngröße von 1 µm aufweisen. Die Wärmeleitfähigkeit einer erfindungsgemäß hergestellten Keramik aus Aluminiumtitanat beträgt etwa 1,5 W/(m K) bis 3 W/(m K), die Biegefestigkeit etwa 15 MPa bis 100 MPa.

Ein weiterer Aspekt der Erfindung umfasst ein Solarabsorbermodul, wobei der Absorberkelch des Solarabsorbermoduls nach dem oben beschriebenen erfindungsgemäßen Verfahren hergestellt wird.

Die Erfindung umfasst des Weiteren die Verwendung eines erfindungsgemäßen Solarabsorbermoduls in einem solarthermischen Kraftwerk, beispielsweise als Hochtemperaturwärmetauscher.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
Figur 1 A eine Seitenansicht auf die Längsseite eines Solarabsorbermoduls,
Figur 1 B eine Querschnittdarstellung entlang der Schnittlinie A-A aus Figur 1 A,
Figur 2 A eine Seitenansicht auf die Längsseite einer Absorberwabe,
Figur 2 B eine Querschnittdarstellung entlang der Schnittlinie C-C aus Figur 2 A,
Figur 3 A eine Seitenansicht auf die Längsseite eines Absorberkelches,
Figur 3 B eine Querschnittdarstellung entlang der Schnittlinie E-E aus Figur 3 A,
Figur 4 eine Querschnittsdarstellung zweier erfindungsgemäßer Solarabsorbermodule und doppelwandige Rohrstutzen,
Figur 5 eine räumliche Darstellung einer Solarmodulanordnung mit Tragekonstruktion
   und
Figur 6 ein detailliertes Flussdiagramm des erfindungsgemäßen Verfahrens

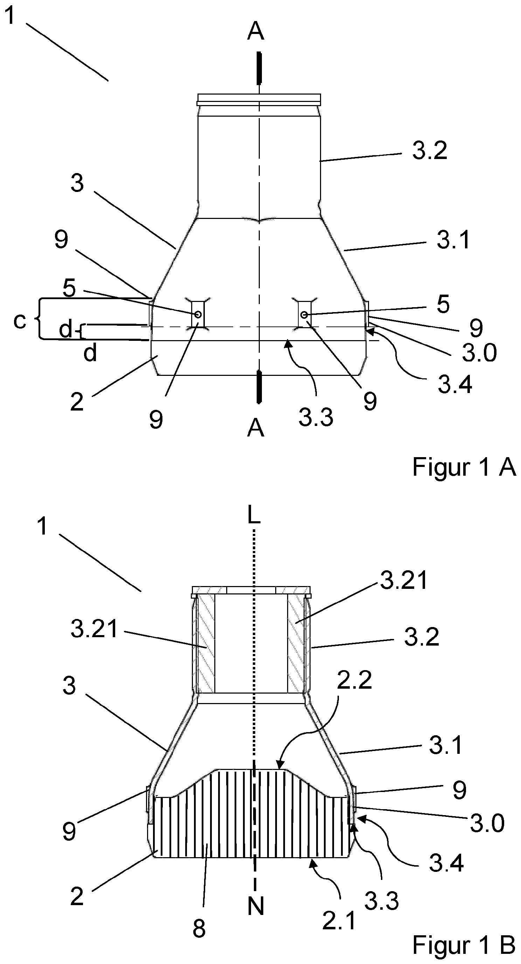

Figur 1 A zeigt eine Seitenansicht auf die Längseite eines Solarabsorbermoduls 1 und Figur 1 B eine Querschnittdarstellung entlang der Schnittlinie A-A aus Figur 1 A. Das Solarabsorbermodul 1 umfasst eine Absorberwabe 2 und einen Absorberkelch 3.

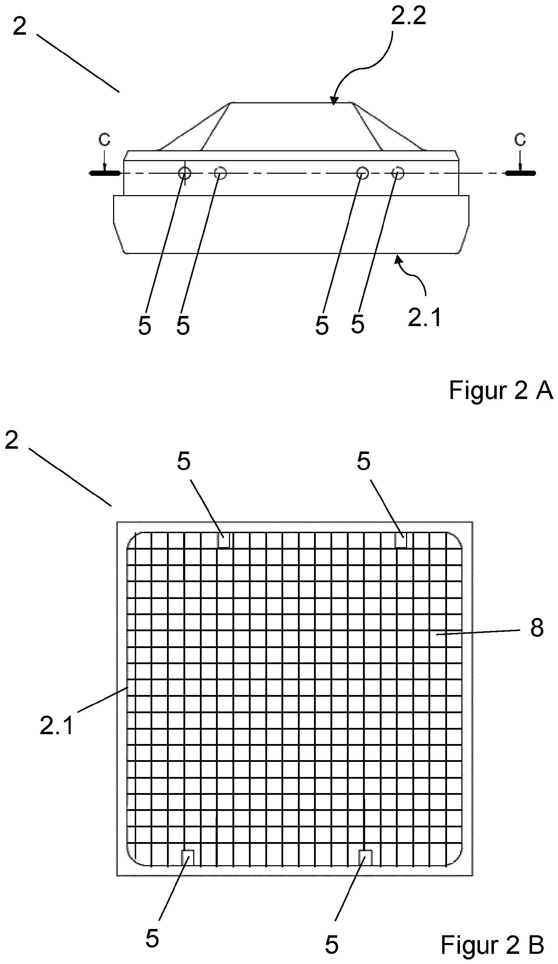

Figur 2 A zeigt eine Seitenansicht auf die Längsseite einer Absorberwabe 2. Die Absorberwabe 2 umfasst Kanäle 8, die im Wesentlichen geradlinige durch die Absorberwabe 2 verlaufen. Die Kanäle 8 verbinden die Lufteintrittsseite 2.1 mit der Luftaustrittsseite 2.2 der Absorberwabe 2. Figur 2 B zeigt eine Querschnittdarstellung entlang der Schnittlinie C-C aus Figur 2 A. Die Kanäle 8 sind hier beispielsweise gitterförmig angeordnet. In einer vorteilhaften Ausgestaltung der erfindungsgemäßen Absorberwabe 2 sind die Kanäle 8 mehreckig ausgestaltet und wabenförmig angeordnet. Die Absorberwabe 2 hat beispielsweise einen im Wesentlichen quadratischen Querschnitt mit einer Kantenlänge von 140 mm und einer Dicke von 60 mm an der dicksten Stelle.

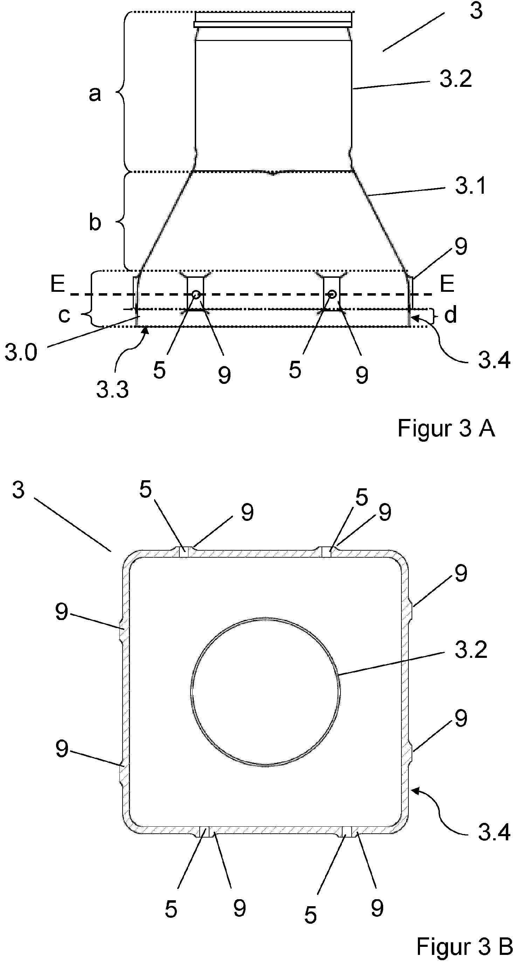

Figur 3 A zeigt eine Seitenansicht auf die Längsseite eines Absorberkelches 3 und Figur 3 B eine Querschnittdarstellung entlang der Schnittlinie E-E aus Figur 3 A. Der Absorberkelch 3 besteht aus einem vierkantförmigen Abschnitt 3.0 und einem quadratischen, trichterförmigen Abschnitt 3.1 der in einen kreisrunden, reduzierten Abschnitt 3.2 mündet. Der vierkantförmige Abschnitt 3.0 dient zur Aufnahme der Absorberwabe 2. Der trichterförmige Abschnitt 3.1 dient zum Bündeln des Luftstroms, der durch die Absorberwabe 2 gleitet wird. Der reduzierte Abschnitt 3.2 dient zu Weiterleitung von Luft, die durch die Absorberwabe 2 eingesogen wird. Der Absorberkelch 3 hat beispielsweise eine Länge von 154 mm. Die Länge c des vierkantförmigen Abschnitts 3.0 beträgt beispielweise 25 mm, die Länge b des trichterförmigen Abschnitts 3.1 beträgt beispielsweise 57 mm und die Länge a des reduzierten Abschnitts beträgt beispielsweise 72 mm. Im trichterförmigen Abschnitt 3.1 hat der Absorberkelch 3 einen im Wesentlichen quadratischen Querschnitt mit einer äußeren Weite von 140 mm und einer inneren Weite von 133 mm. Der vierkantförmige Abschnitt 3.0 des Absorberkelches 3 und die Absorberwabe 2 sind derart aufeinander abgestimmt, dass ein passgenauer Einbau mit einem Fügespalt von 0,5 mm bis 1 mm möglich ist. Der reduzierte Abschnitt 3.2 des Absorberkelchs 3 ist zylinderförmig und hat einen Innendurchmesser von beispielsweise 72 mm und einen Außendurchmesser von 80 mm.

Die Außenseite 3.4 des Absorberkelches 3 weißt im Bereich des vierkantförmigen Abschnitts 3.0 beispielsweise acht Abstandshalter 9 auf, von denen jeweils zwei auf jeder Seite des vierkantförmigen Abschnitts 3.0 angeordnet sind. Die Abstandshalter 9 weisen einen Abstand d zur Vorderkante 3.3 des Absorberkelches 3 von 4 mm bis 20 mm und beispielsweise von 8 mm auf. Der Abstand d des Abstandshalter 9 zur Vorderkante 3.3 des Absorberkelches 3 beträgt bevorzugt von 15 % bis 80 % der Länge c des vierkantförmigen Abschnitts 3.0 des Absorberkelches 3 und besonders bevorzugt von 25 % bis 40 %. Der Abstandshalter 9 erstreckt sich beispielsweise bis zum Übergang des vierkantförmigen Abschnitts 3.0 zum trichterförmigen Abschnitt 3.1.

Der Abstand d des Abstandshalters 9 zur Vorderkante 3.3 des Absorberkelches 3 ist, wie oben bereits ausgeführt von entscheidender Bedeutung für das erfindungsgemäße Verfahren zur Herstellung des Absorberkelches 3. Ein Abstandshalter 9 mit einem erfindungsgemäßen Abstand zur Vorderkante 3.3 des Absorberkelches 3 stabilisiert die Wandung des vierkantförmigen Abschnitts 3.0 des Absorberkelches 3 bei der Entnahme aus der hohlen Form.

Der reduzierte Abschnitt 3.2 des Absorberkelches enthält in seinem Inneren beispielsweise eine rohrförmige Isolation 3.21 aus Aluminiumsilicatwolle, beispielsweise aus dem Werkstoff Kerform KVS 154 der Firma Rath AG, Wien, Österreich mit einer Wärmeleitfähigkeit von 0,23 W/mK bei einer Temperatur von 1000 °C.

Der Absorberkelch 3 enthält beispielsweise aus einen hochtemperaturbeständigen keramischen Werkstoffen aus Cordierit, mit einem Gehalt von 57 Gew.-% Aluminiumoxid (Al₂O₃), 35 Gew.-% Siliziumoxid (SiO₂) und 6 Gew.-% Magnesiumoxid (MgO), sowie herstellungsbedingten Beimengungen. Der Gießschlicker ist jedoch feinkörniger als gepresste Cordierit-Werkstoffe, um ein glattes Ablaufen des Schlickers von der Innenfläche der hohlen Gießform zu ermöglichen. Der Cordierit-Werkstoff wird beispielweise durch ein Gießverfahren zum Absorberkelch 3 geformt. Die Absorberwabe 2 enthält beispielsweise siliciuminfiltriertes Siliciumcarbid.

Der Absorberkelch 3 und die Absorberwabe 2 weisen Öffnungen 5 auf. In eingebauter Lage, liegen die Öffnungen 5 des Absorberkelches 3 den Öffnungen 5 der Absorberwabe 2 gegenüber. Die Öffnungen 5 haben beispielsweise einen Durchmesser von 4,5 mm. Die Öffnungen 5 in der Absorberwabe 2 haben beispielsweise eine Tiefe von 6 mm. Die Absorberwabe 2 wird mit dem Absorberkelch 3 durch keramische Stifte verbunden, die in die Öffnungen 5 eingebracht werden. Die keramischen Stifte sind beispielsweise stabförmig, mit einem Durchmesser von 4 mm und einer Länge von 10 mm. Die keramischen Stifte ragen vorzugsweise nicht über den Absorberkelch 3 hinaus und werden beispielsweise durch ein Klebeband während des Einbaus befestigt.

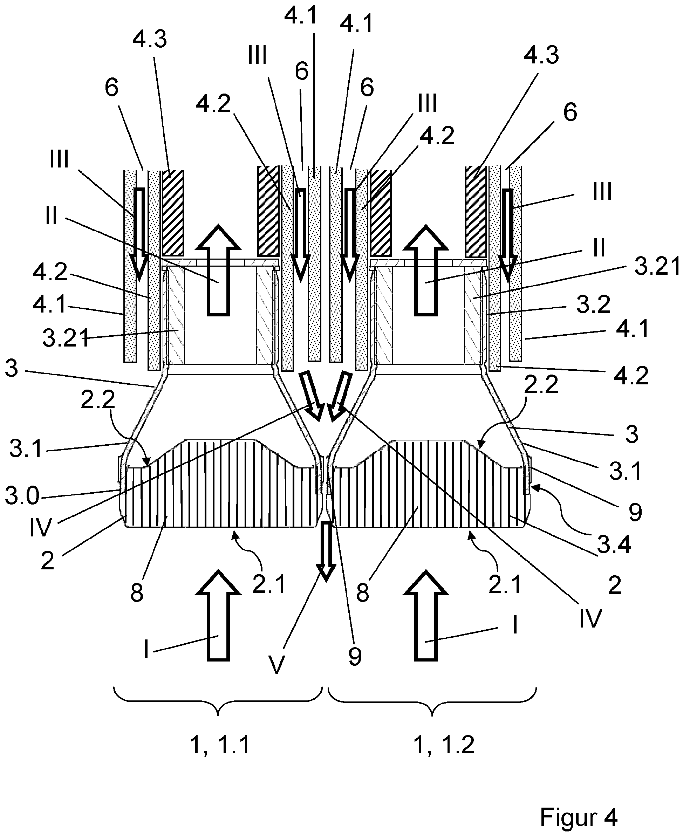

Figur 4 zeigt eine Querschnittsdarstellung zweier erfindungsgemäßer Solarabsorbermodule 1.1, 1.2 und doppelwandiger Rohrstutzen 4. Das Innenrohr 4.2 des doppelwandigen Rohrs 4 weist eine Isolation 4.3 aus einem Keramikfaserpapier auf, beispielsweise aus mehreren Lagen eines 3 mm dicken Aluminiumsilicatfaserpapiers des Typs Alistra 1400 der Firma Rath AG, Wien, Österreich.

Beim Betrieb in einem solarthermischen Kraftwerk wird die Absorberwabe 2 mit seiner Lufteintrittsseite 2.1 der Sonneneinstrahlung ausgesetzt und erhitzt. Anschließend wird Luft I über die Lufteintrittseite 2.1 angesaugt. Die angesaugte Luft I hat nach Durchlaufen der Absorberwabe 2 beispielsweise eine Temperatur von bis zu 1000 °C. Im Bereich der Wände des trichterförmigen Abschnitts 3.1 des Absorberkelches 3 wird die Luft durch Kontakt mit der kälteren Außenwand auf abgekühlt. Die angesaugte Luft I wird im Inneren des Absorberkelches 3 vom trichterförmigen Abschnitt 3.1 in den reduzierten Abschnitt 3.2 überführt und dann als ausgestoßene Luft II einer Energiegewinnung zugeführt. Bei der Energiegewinnung wird die Luft beispielsweise auf Temperaturen von etwa 120 °C abgekühlt. Die abgekühlte Rückkehrluft III wird durch einen Rückluftkanal 6 zurückgeführt. Der Rückluftkanal 6 wird durch den Zwischenraum zwischen Außenrohr 4.1 und dem Innenrohr 4.2 eines doppelwandigen Rohrs 4 gebildet. Die Rückkehrluft IV passiert den Zwischenraum zwischen den trichterförmigen Abschnitten 3.1 der Absorberkelches 3. Da der Absorberkelch 3 im trichterförmigen Abschnitt 3.1 keine thermische Isolierung aufweist finden bei Absorberkelchen 3 aus Materialien mit höheren Wärmeleitfähigkeiten nach dem Stand der Technik große Wärmeverluste statt. Bei erfindungsgemäßen Absorberkelchen 3 aus gegossenen Cordierit-Werkstoffen sind die Wärmeverluste geringer. Die Rückkehrluft IV wird insbesondere im nicht isolierten, trichterförmigen Abschnitt 3.1 des Absorberkelchs 3 auf etwa 180 °C erwärmt. Die vierkantförmigen Abschnitte 3.0 der Absorberkelche 3 werden durch Abstandshalter 9 auf Abstand gehalten. Der Abstand bleibt erhalten, auch wenn sich die Absorberkelche 3 durch Erwärmung thermisch ausdehnen. Die Rückkehrluft IV verlässt als austretende Luft IV die Anordnung über die durch die Abstandshalter 9 entstandenen Zwischenräume. Erfahrungsgemäß können maximal 60 % der austretenden Luft IV als angesaugte Luft I erneut eingesogen werden.

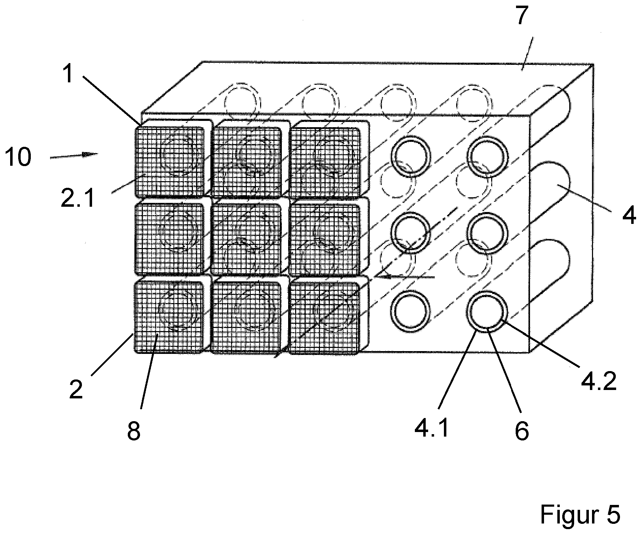

Figur 5 zeigt eine räumliche Darstellung einer Solarmodulanordnung 10 mit einer Tragekonstruktion 7. Die Tragekonstruktion 7 umfasst beispielsweise 15 doppelwandige Rohrstutzen 4. Jeder doppelwandige Rohrstutzen 4 dient zur Aufnahme des reduzierten Abschnitts 3.2 eines Absorberkelches 3 eines Solarabsorbermoduls 1.

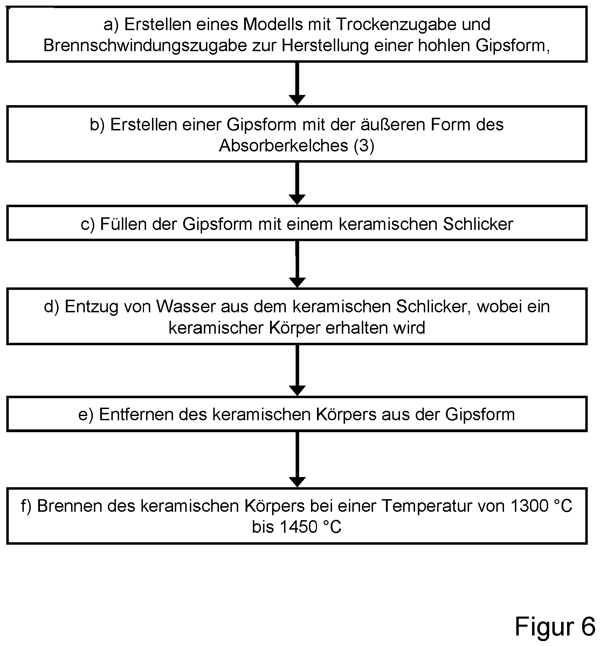

Figur 6 zeigt ein detailliertes Flussdiagramm des erfindungsgemäßen Verfahrens. In einem ersten Schritt (a) wird ein Modell des erfindungsgemäßen Absorberkelches 3 hergestellt. Die Maße des Modells berücksichtigen für den Fachmann in einfacher Weise ermittelbare Trocknungs- und Brennschwindungszugaben. In einem zweiten Schritt (b) wird eine hohle Gipsform mit der äußeren Form des Absorberkelches 3 mit Hilfe des Modells aus dem ersten Schritt (a) erstellt. In einem dritten Schritt (c) wird die Gipsform mit einem keramischen Schlicker befüllt.

Der keramische Schlicker enthält beispielsweise keramische Bestandteile aus 7 Gew.- % Blauton, 10 Gew.-% Ton, 32 Gew.-% Kerphalit (Aluminiumsilikat) der Firma Damrec SAS, Paris Frankreich, 16 Gew.-% Sierralite 2000 der Firma Luzenac Europe SAS, Toulouse, France und 35 Gew.-% Sintermullit z.B. der Firma VAW Vereinigte Aluminiumwerke AG, Grevenbroich, Deutschland. Die Angaben in Gew.-% beziehen sich hier jeweils auf die Trockenmasse. Das Kerphalit hat beispielsweise Korngrößen von 0 mm bis 0,16 mm. Das Sintermullit hat beispielsweise Korngrößen von 0 mm bis 0,1 mm.

Der keramische Schlicker enthält die keramischen Bestandteile in einer Suspension mit etwa 28 Gew.-% Wasser und weiteren üblichen Hilfsstoffen wie 0,2 Gew.-% Verflüssiger und 0, 2 Gew.-% Binder.

In einem weiteren Beispiel des erfindungsgemäßen Verfahrens enthalten die keramischen Bestandteile des keramischen Schlickers von 0 Gew. % bis 5 Gew.-% Titanoxid (TiO₂), 0 Gew. % bis 5 Gew.-% Zirconiumoxid (ZrO₂) und/oder 0 Gew. % bis 5 Gew.-% Zirconiumsilicat (ZrSiO₄) in der Trockenmasse.

In einer weiteren einem weiteren Beispiel des erfindungsgemäßen Verfahrens enthalten die keramischen Bestandteile des keramischen Schlickers von 0 Gew. % bis 30 Gew.-% Siliciumcarbid (SiC).

In einem weiteren Schritt (d) wird dem keramischen Schlicker durch die Gipsform Wasser entzogen, wobei ein keramischer Körper erhalten wird. In einem weiteren Schritt (e) wird die Gipsform entfernt. Im letzten Verfahrensschritt (f) wird der keramische Körper bei einer Temperatur von 1300 °C bis 1450 °C gebrannt.

Die Gipsform weist an der Außenseite 3.4 des Absorberkelches 3 im Bereich des vierkantförmigen Abschnitts 3.0 Aussparungen für beispielsweise acht Abstandshalter 9 auf, von denen jeweils zwei auf jeder Seite des vierkantförmigen Abschnitts 3.0 angeordnet sind. Die Aussparungen für die Abstandshalter 9 weisen einen Abstand d zur Vorderkante 3.3 des Absorberkelches 3 von 4 mm bis 20 mm und beispielsweise von 8 mm auf. Der Abstand d des Abstandshalter 9 zur Vorderkante 3.3 des Absorberkelches 3 beträgt bevorzugt von 15 % bis 80 % der Länge c des vierkantförmigen Abschnitts 3.0 des Absorberkelches 3 und besonders bevorzugt von 25 % bis 40 %. Der Abstandshalter 9 erstreckt sich beispielsweise bis zum Übergang des vierkantförmigen Abschnitts 3.0 zum trichterförmigen Abschnitt 3.1.

Der Abstand d des Abstandshalters 9 zur Vorderkante 3.3 des Absorberkelches 3 ist, wie oben bereits ausgeführt von entscheidender Bedeutung für das erfindungsgemäße Verfahren zur Herstellung des Absorberkelches 3. Ein Abstandshalter 9 mit einem erfindungsgemäßen Abstand zur Vorderkante 3.3 des Absorberkelches 3 stabilisiert die Wandung des vierkantförmigen Abschnitts 3.0 des Absorberkelches 3 bei der Entnahme aus der hohlen Form.

Die Porosität des gebrannten keramischen Körpers kann durch die Zugabe eines Porosierungsmittel zum der keramische Schlicker eingestellt werden.

Die Dichte des gebrannten keramischen Körpers beträgt beispielsweise von 1,8 g/cm³ bis 2,1 g/cm³, bevorzugt 1,9 g/cm³ bis 2,0 g/cm³ und beispielsweise 1,95 g/cm³. Die Porosität des gebrannten Cordierit beträgt beispielsweise 25 %.

Solarabsorbermodule nach dem Stand der Technik bestehen üblicherweise aus siliciuminfiltriertem Siliciumcarbid (SiSiC). In Tabelle 1 werden die Materialeigenschaften von siliciuminfiltriertem Siliciumcarbid mit Materialeigenschaften von Cordierit verglichen, welches in dem erfindungsgemäßen Gießverfahren verarbeitet wurde.

Die Wärmeleitfähigkeit des gegossenen Cordierit-Werkstoffs beträgt 1,24 W/(mK) und ist damit um etwa 96 % geringer als die Wärmeleitfähigkeit von siliciuminfiltriertem Siliciumcarbid. Die niedrigere Wärmeleitfähigkeit von Absorberkelchen aus Cordierit führt zu geringeren Wärmeverlusten und damit zu einem höheren Wirkungsgrad von solarthermischen Kraftwerken.

**Tabelle 1**

| | gegossenener Cordierit-Werkstoff | silicium infiltriertes Siliciumcarbid (Stand der Technik) |
|---|---|---|
| Rohdichte | 1,95 kg/dm³ | 2,8 kg/dm³ |
| Offene Porosität | 25 % | 0 % |
| Wärmedehnung | 2,9 * 10⁻⁶ K⁻¹ | 4,5 * 10⁻⁶ K⁻¹ |
| Wärmeleitfähigkeit | 1,24 W/(mK) | 35 W/(mK) |

Erfindungsgemäße Solarabsorbermodule mit Absorberkelchen aus gegossenem Cordierit zeigten in Versuchen am Teststand des Deutschen Zentrums für Luft- und Raumfahrt (DLR) mit Rückkehrluft einen um etwas 8 % besseren thermischen Wirkungsgrad als Solarabsorbermodule mit Absorberkelchen aus siliciuminfiltriertem Siliciumcarbid nach dem Stand der Technik.

In Tabelle 2 wird die Biegefestigkeit eines gepressten Cordierit-Werkstoffs mit einem nach dem erfindungsgemäßen Verfahren gegossenen Cordierit-Werkstoff verglichen. Der gegossene Cordierit-Werkstoff hat eine Kaltbiegefestigkeit bei Raumtemperatur von 36 MPa. Die Kaltbiegefestigkeit des gegossenen Cordierit-Werkstoffs ist damit um 176 % höher als die Kaltbiegefestigkeit des gepressten Cordierit-Werkstoffs. Der gegossene Cordierit-Werkstoff hat eine Heißbiegefestigkeit bei 1300 °C von 20 MPa. Die Heißbiegefestigkeit des gegossenen Cordierit-Werkstoffs ist damit um 133 % höher als die Heißbiegefestigkeit des gepressten Cordierit-Werkstoffs.

Der Vergleich zwischen dem gegossenen Cordierit-Werkstoff und dem gepressten Cordierit-Werkstoff zeigt eine für den Fachmann überraschend große Biegefestigkeit des gegossenen Cordierit-Werkstoffs. Gegossene Cordierit-Werkstoffe sind deshalb besser in der Lage, die mechanischen Spannungen von Solarabsorbermodulen unter Temperaturwechselbedingungen aufzunehmen, was die Lebensdauer und Beständigkeit der Solarabsorbermodule erhöht.

**Tabelle 2**

| | Cordierit-Werkstoff, gepresst nach Stand der Technik (AnnaCorit 60) | Cordierit-Werkstoff, gegossen |
|---|---|---|
| Kaltbiegefestigkeit (Raumtemperatur) | 13 MPa | 36 MPa |
| Heißbiegefestigkeit (1300 °C) | 15 MPa | 20 MPa |

Ein erfindungsgemäßes Solarabsorbermodul wurde in einem Feldversuch am Sonnenofen Plataforma Solar im spanischen Almeria mehr als 100-mal mit etwa 200 K/min¹ erwärmt und wieder abgekühlt. Das Solarabsorbermodul zeigte keinerlei Schäden oder Beeinträchtigungen.

Solarabsorbermodule mit Absorberkelchen aus gegossenem Cordierit zeigen somit eine ausreichende mechanische Belastbarkeit bei geringeren Wärmeverlusten durch Wärmeleitung und höherem thermischen Wirkungsgrad verglichen mit Materialien nach dem Stand der Technik.

Dieses Ergebnis war für den Fachmann unerwartet und überraschend.

Es zeigen:
- 1, 1.1, 1.2: Solarabsorbermodul
- 2: Absorberwabe
- 2.1: Lufteintrittsseite der Absorberwabe 2
- 2.2: Luftaustrittsseite der Absorberwabe 2
- 3: Absorberkelch
- 3.0: vierkantförmiger Abschnitt des Absorberkelches 3
- 3.1: trichterförmiger Abschnitt des Absorberkelches 3
- 3.2: reduzierter Abschnitt des Absorberkelches 3
- 3.21: Isolation des reduzierten Abschnitts 3.2
- 3.3: Vorderkante des Absorberkelchs 3
- 3.4: Außenseite des Absorberkelches 3
- 4: doppelwandiges Rohr, doppelwandiger Rohrstutzen
- 4.1: Außenrohr
- 4.2: Innenrohr
- 4.3: Isolation des doppelwandigen Rohrs 4
- 5: Öffnung
- 6: Rückluftkanal
- 7: Tragekonstruktion
- 8: Kanal
- 9: Abstandshalter
- 10: Solarmodulanordnung
- I: angesaugte Luft
- II: ausgestoßene Luft
- III, IV: Rückkehrluft
- IV: austretende Luft
- a: Länge des reduzierten Abschnitts 3.2 des Absorberkelches 3
- b: Länge des trichterförmigen Abschnitts 3.1 des Absorberkelches 3
- c: Länge des vierkantförmigen Abschnitts 3.0 des Absorberkelches 3
- d: Abstand des Abstandshalters 9 von der Vorderkante 3.3 des Absorberkelches 3
- A-A: Schnitt durch das Solarabsorbermodul 1
- C-C: Schnitt durch die Absorberwabe 2
- E-E: Schnitt durch den Absorberkelch 3
- L: Längsachse des Absorberkelches 3
- N: Oberflächennormalenrichtung der Absorberwabe 2

## Patentansprüche

1. Solarabsorbermodul (1), umfassend:
- eine Absorberwabe (2) mit Kanälen (8), die die Lufteintrittsseite (2.1) der Absorberwabe (2) mit der Luftaustrittsseite (2.2) der Absorberwabe (2) verbinden und
- einen Absorberkelch (3) mit einem vierkantförmigen Abschnitt (3.0), einem trichterförmigen Abschnitt (3.1) und einem reduzierten Abschnitt (3.2),
wobei der Absorberkelch (3) einen keramischen Werkstoff mit einer Wärmeleitfähigkeit von ≤ 3 W/(m K) enthält,
**dadurch gekennzeichnet, dass**
der keramische Werkstoff gegossenes Cordierit oder gegossenes Aluminiumtitanat enthält und der vierkantförmige Abschnitt (3.0) des Absorberkelchs (3) an seiner Außenseite (3.4) mindestens einen Abstandshalter (9) pro Seite mit einem Abstand d zur Vorderkante (3.3) des Absorberkelches (3) von 15 % bis 80 % der Länge c des vierkantförmigen Abschnitts (3.0) aufweist.

2. Solarabsorbermodul (1) nach Anspruch 1, wobei der vierkantförmige Abschnitt (3.0) des Absorberkelchs (3) an seiner Außenseite (3.4) zwei Abstandhalter (9) pro Seite aufweist.

3. Solarabsorbermodul (1) nach einem der Ansprüche 1 oder 2, wobei der Abstandshalter (9) einen Abstand d zur Vorderkante (3.3) des Absorberkelchs (3) von 25 % bis 40 % der Länge c des vierkantförmigen Abschnitts (3.0) aufweist.

4. Solarabsorbermodul (1) nach einem der Ansprüche 1 bis 3, wobei das Cordierit von 30 Gew.-% bis 60 Gew.-% Aluminiumoxid (Al₂O₃), von 30 Gew.-% bis 60 Gew.-% Siliziumoxid (SiO₂), von 1 Gew.-% bis 10 Gew.% Magnesiumoxid (MgO) und von 0 Gew. % bis 5 Gew.-% Titanoxid (TiO₂), von 0 Gew. % bis 5 Gew.-% Zirconiumoxid (ZrO₂) und/oder von 0 Gew. % bis 5 Gew.-% Zirconiumsilicat (ZrSiO₄) enthält.

5. Solarabsorbermodul (1) nach einem der Ansprüche 1 bis 3, wobei das Cordierit
von 50 Gew.-% bis 65 Gew.-% Aluminiumoxid (Al₂O₃),
von 30 Gew.-% bis 40 Gew.-% Siliziumoxid (SiO₂) und
von 3 Gew.-% bis 10 Gew.% Magnesiumoxid (MgO),
bevorzugt
von 52 Gew.-% bis 62 Gew.-% Aluminiumoxid (Al₂O₃),
von 30 Gew.-% bis 40 Gew.-% Siliziumoxid (SiO₂) und
von 5 Gew.-% bis 7 Gew.% Magnesiumoxid (MgO),
enthält.

6. Solarabsorbermodul (1) nach einem der Ansprüche 1 bis 3, wobei das Cordierit
von 30 Gew.-% bis 40 Gew.-% Aluminiumoxid (Al₂O₃),
von 50 Gew.-% bis 65 Gew.-% Siliziumoxid (SiO₂) und
von 3 Gew.-% bis 10 Gew.% Magnesiumoxid (MgO),
bevorzugt
von 35 Gew.-% bis 40 Gew.-% Aluminiumoxid (Al₂O₃),
von 30 Gew.-% bis 40 Gew.-% Siliziumoxid (SiO₂) und
von 5 Gew.-% bis 7 Gew.% Magnesiumoxid (MgO),
enthält.

7. Solarabsorbermodul (1) nach einem der Ansprüche 1 bis 6, wobei das Cordierit von 0 Gew.-% bis 30 Gew.-% Siliciumcarbid (SiC) enthält.

8. Solarabsorberanordnung (10) mit einer Tragkonstruktion (7) und mindestens einem Solarabsorbermodul (1) nach einem der Ansprüche 1 bis 7, wobei die Tragkonstruktion (7) doppelwandige Rohrstutzen (4) mit Rückluftkanälen (6) aufweist, in deren Innenrohr (4.2) die reduzierten Abschnitte (3.2) der Absorberkelche (3) aufgenommen sind.

9. Verfahren zur Herstellung eines Solarabsorbermoduls (1) nach einem der Ansprüche 1 bis 3, wobei der Absorberkelch (3) hergestellt wird, indem mindestens:
a) ein Modell mit Trockenzugabe und Brennschwindungszugabe zur Herstellung einer hohlen Gipsform erstellt wird,
b) eine hohle Gipsform mit der äußeren Form eines Absorberkelches (3) erstellt wird,
c) die hohle Form mit einem keramischen Schlicker gefüllt wird,
d) dem keramischen Schlicker Wasser entzogen wird und ein keramischer Körper erhalten wird,
e) der keramische Körper aus der hohlen Gipsform entfernt wird und
f) der keramische Körper bei einer Temperatur von 1300 °C bis 1450 °C gebrannt wird.

10. Verwendung eines Solarabsorbermoduls (1) nach einem der Ansprüche 1 bis 7 in einem solarthermischen Kraftwerk.

## Claims

1. Solar absorber module (1), comprising:
- an absorber honeycomb (2) with channels (8) that connect the air inlet side (2.1) of the absorber honeycomb (2) to the air outlet side (2.2) of the absorber honeycomb (2) and
- an absorber cup (3) with a square-shaped section (3.0), with a funnel-shaped section (3.1), and a reduced section (3.2),
wherein the absorber cup (3) contains a ceramic material with thermal conductivity of
≤ 3 W/(mK),
**characterized in that**
the ceramic material contains cast cordierite or cast aluminum titanate and the square-shaped section (3.0) of the absorber cup (3) has, on its exterior (3.4), at least one spacer (9) per side with a distance d to the front edge (3.3) of the absorber cup (3) of 15% to 80% of the length c of the square-shaped section (3.0).

2. Solar absorber module (1) according to claim 1, wherein the square-shaped section (3.0) of the absorber cup (3) has, on its exterior (3.4), two spacers (9) per side.

3. Solar absorber module (1) according to one of claims 1 or 2, wherein the spacer (9) has a distance d to the front edge (3.3) of the absorber cup (3) of 25% to 40% of the length c of the square-shaped section (3.0).

4. Solar absorber module (1) according to one of claims 1 through 3, wherein the cordierite contains from 30 wt.-% to 60 wt.-% aluminum oxide (Al₂O₃), from 30 wt.-% to 60 wt.-% silicon oxide (SiO₂), from 1 wt.-% to 10 wt.-% magnesium oxide (MgO), and from 0 wt.-% to 5 wt.-% titanium oxide (TiO₂), from 0 wt.-% to 5 wt.-% zirconium oxide (ZrO₂), and/or from 0 wt.-% to 5 wt.-% zirconium silicate (ZrSiO₄).

5. Solar absorber module (1) according to one of claims 1 through 3, wherein the cordierite contains
from 50 wt.-% to 65 wt.-% aluminum oxide (Al₂O₃),
from 30 wt.-% to 40 wt.-% silicon oxide (SiO₂), and
from 3 wt.-% to 10 wt.-% magnesium oxide (MgO),
preferably
from 52 wt.-% to 62 wt.-% aluminum oxide (Al₂O₃),
from 30 wt.-% to 40 wt.-% silicon oxide (SiO₂), and
from 5 wt.-% to 7 wt.-% magnesium oxide (MgO).

6. Solar absorber module (1) according to one of claims 1 through 3, wherein the cordierite contains
from 30 wt.-% to 40 wt.-% aluminum oxide (Al₂O₃),
from 50 wt.-% to 65 wt.-% silicon oxide (SiO₂), and
from 3 wt.-% to 10 wt.-% magnesium oxide (MgO),
preferably
from 35 wt.-% to 40 wt.-% aluminum oxide (Al₂O₃),
from 30 wt.-% to 40 wt.-% silicon oxide (SiO₂), and
from 5 wt.-% to 7 wt.-% magnesium oxide (MgO),

7. Solar absorber module (1) according to one of claims 1 through 6, wherein the cordierite contains from 0 wt.-% to 30 wt.-% silicon carbide (SiC).

8. Solar absorber arrangement (10) with a supporting structure (7) and at least one solar absorber module (1) according to one of claims 1 through 7 wherein the supporting structure (7) has double-walled pipe sockets (4) with return air channels (6), in whose inner pipe (4.2) the reduced sections (3.2) of the absorber cups (3) are accommodated.

9. Method for producing a solar absorber module (1) according to one of claims 1 through 3,
wherein the absorber cup (3) is produced by at least:
a) creating a model with dry additions and firing shrinkage additions for producing a hollow plaster mold,
b) creating a hollow plaster mold with the external shape of an absorber cup (3),
c) filling the hollow mold with a ceramic slurry,
d) extracting water from the ceramic slurry and obtaining a ceramic body,
e) removing the ceramic body from the hollow plaster mold, and
f) firing the ceramic body at a temperature of 1300 °C to 1450 °C.

10. Use of a solar absorber module (1) according to one of claims 1 through 7 in a solar thermal power plant.

## Revendications

1. Module absorbeur solaire (1), comportant :
- une structure d'absorbeur en nid d'abeilles (2) ayant des canaux (8) qui relient le côté entrée d'air (2.1) de la structure d'absorbeur en nid d'abeilles (2) au côté sortie d'air (2.2) de la structure d'absorbeur en nid d'abeilles (2) ; et
- un élément d'absorbeur (3) en forme de coupe ayant une partie de forme quadrangulaire (3.0), une partie en forme d'entonnoir (3.1) et une partie réduite (3.2), dans lequel l'élément d'absorbeur en forme de coupe (3) contient un matériau céramique ayant une conductivité thermique de ≤ 3 W/(m K),
**caractérisé par le fait que**
le matériau céramique contient de la corderie coulée ou du titanate d'aluminium coulé et la partie de forme quadrangulaire (3.0) de l'élément d'absorbeur en forme de coupe (3) présente sur son côté externe (3.4) au moins un espaceur (9) par côté avec une distance d par rapport au bord avant (3.3) de l'élément d'absorbeur en forme de coupe (3) de 15 % à 80 % de la longueur c de la partie de forme quadrangulaire (3.0).

2. Module absorbeur solaire (1) selon la revendication 1, dans lequel la partie de forme quadrangulaire (3.0) de l'élément d'absorbeur en forme de coupe (3) présente sur son côté externe (3.4) deux espaceurs (9) par côté.

3. Module absorbeur solaire (1) selon l'une des revendications 1 ou 2, dans lequel l'espaceur (9) présente une distance d par rapport au bord avant (3.3) de l'élément d'absorbeur en forme de coupe (3) de 25 % à 40 % de la longueur c de la partie de forme quadrangulaire (3.0).

4. Module absorbeur solaire (1) selon l'une quelconque des revendications 1 à 3, dans lequel la cordiérite contient de 30 % en poids à 60 % en poids d'oxyde d'aluminium (Al₂O₃), de 30 % en poids à 60 % en poids d'oxyde de silicium (SiO₂), de 1 % en poids à 10 % en poids d'oxyde de magnésium (MgO) et de 0 % en poids à 5 % en poids d'oxyde de titane (TiO₂), de 0 % en poids à 5 % en poids d'oxyde de zirconium (ZrO₂) et/ou de 0 % en poids à 5 % en poids de silicate de zirconium (ZrSiO₄).

5. Module absorbeur solaire (1) selon l'une des revendications 1 à 3, dans lequel la cordiérite contient de 50 % en poids à 65 % en poids d'oxyde d'aluminium (Al₂O₃) ;
de 30 % en poids à 40 % en poids d'oxyde de silicium (SiO₂) ; et
de 3 % en poids à 10 % en poids d'oxyde de magnésium (MgO), de préférence
de 52 % en poids à 62 % en poids d'oxyde d'aluminium (Al₂O₃) ;
de 30 % en poids à 40 % en poids d'oxyde de silicium (SiO₂) ; et
de 5 % en poids à 7 % en poids d'oxyde de magnésium (MgO).

6. Module absorbeur solaire (1) selon l'une des revendications 1 à 3, dans lequel la cordiérite contient de 30 % en poids à 40 % en poids d'oxyde d'aluminium (Al₂O₃) ;
de 50 % en poids à 65 % en poids d'oxyde de silicium (SiO₂) ; et
de 3 % en poids à 10 % en poids d'oxyde de magnésium (MgO), de préférence
de 35 % en poids à 40 % en poids d'oxyde d'aluminium (Al₂O₃) ;
de 30 % en poids à 40 % en poids d'oxyde de silicium (SiO₂) ; et
de 5 % en poids à 7 % en poids d'oxyde de magnésium (MgO).

7. Module absorbeur solaire (1) selon l'une des revendications 1 à 6, dans lequel la cordiérite contient de 0 % en poids à 30 % en poids de carbure de silicium (SiC).

8. Ensemble absorbeur solaire (10) ayant une structure de support (7) et au moins un module absorbeur solaire (1) selon l'une des revendications 1 à 7, la structure porteuse (7) présentant des manchons tubulaires à double paroi (4) ayant des canaux d'air de retour (6), dans le tube interne (4.2) desquels les parties réduites (3.2) de l'élément d'absorbeur en forme de coupe (3) sont reçues.

9. Procédé de fabrication d'un module absorbeur solaire (1) selon l'une des revendications 1 à 3, dans lequel l'élément d'absorbeur (3) en forme de coupe est fabriqué en ce qu'au moins :
a) un modèle avec ajout du retrait au séchage et ajout du retrait à la cuisson pour la fabrication d'un moule en plâtre creux est créé ;
b) un moule en plâtre creux avec la forme externe d'un élement d'absorbeur en forme de coupe (3) est créé ;
c) le moule creux est rempli d'une barbotine céramique ;
d) de l'eau est retirée de la barbotine céramique et un corps céramique est obtenu ;
e) le corps céramique est enlevé du moule en plâtre creux ; et
f) le corps céramique est cuit à une température de 1300 °C à 1450 °C.

10. Utilisation d'un module absorbeur solaire (1) selon l'une quelconque des revendications 1 à 7 dans une centrale solaire thermique.
